**Europäisches Patentamt**

**European Patent Office**

**Office européen des brevets**

(11) Numéro de publication: **0 012 466**
**A1**

## (12) DEMANDE DE BREVET EUROPEEN

(21) Numéro de dépôt: **79200707.2**

(22) Date de dépôt: **03.12.79**

(51) Int. Cl.³: **B 60 D 5/00,** B 62 D 53/00

(30) Priorité: **08.12.78 BE 192223**

(43) Date de publication de la demande: **25.06.80**
**Bulletin 80/13**

(84) Etats contractants désignés: **CH DE NL SE**

(71) Demandeur: **"Delta Automotive Engineering", Avenue de Fré, B-4000 Uccle (BE)**

(72) Inventeur: **Vin, Jean-Pierre, 12, Place Gui d'Arrezzo, Bruxelles (BE)**

(74) Mandataire: **Pirson, Jean et al, c/o Bureau Gevers, S.A. rue de Livourne, 7 bte 1, B-1050 Brussels (BE)**

(54) Véhicule routier articulé, en particulier autobus articulé.

(57) Véhicule routier articulé, en particulier autobus articulé, dont les extrémités d'un véhicule guidant (1) et d'un véhicule guidé (2) sont articulées sur un élément intermédiaire (3) dépourvu de roues de telle sorte qu'il se forme une double articulation (4, 5). Des moyens (10 à 18) contrôlent les déplacements relatifs dans le plan horizontal des axes géométriques longitudinaux du véhicule guidant (1), du véhicule guidé (2) et de l'élément intermédiaire (3).

"Véhicule routier articulé, en particulier autobus articulé"

Un des facteurs limitant la capacité des véhicules de transport en commun réside dans les limitations dimensionnelles légales qui leur sont imposées, à savoir 12 m de longueur et 2,500 m de largeur.

De tels véhicules pourraient être très difficiles à manoeuvrer en trafic congestionné et sur artères étroites, si d'autres limitations n'étaient imposées régissant les conditions d'inscription en courbe, à savoir dans les pays les plus exigeants 12 m de rayon hors tout pour le coin avant extérieur à la courbe et, dans ces mêmes conditions, 6,500 m de rayon minimum pour la face latérale intérieure à la courbe au droit de l'essieu arrière, le coin arrière extérieur à la courbe ne pouvant balayer au maximum que 500 mm en dehors de la zone balayée au droit de l'essieu arrière.

De nouvelles législations réduiront le rayon interne minimum à 5,300 m et ne limiteront plus le balayage. Cependant, les utilisateurs de bus de ville ne pourront pratiquement s'écarter des législations actuelles, sauf à s'exposer à des problèmes de maniabilité.

Il résulte de ces impératifs d'inscription en courbe que la surface théorique déterminée par les longueur et largeur maximum se trouve diminuée, la longueur pratique ne pouvant excéder 11,800 m sauf à devoir couper exagérément les coins avant, les coins arrière devant l'être également.

Des véhicules de transport en commun de plus grande capacité peuvent résoudre de nombreux problèmes d'exploitation et en réduire considérablement les coûts, d'où les bus à étages et articulés, ces derniers pouvant légalement atteindre 18 m.

Cependant, à ce jour, aucun véhicule articulé même inférieur à 18 m en longueur ne peut répondre aux conditions d'inscription en courbe prévues originellement pour des véhicules rigides.

Des exemptions légales sont donc nécessaires qui ne résolvent en rien les problèmes de maniabilité.

Il existe actuellement deux types de bus articulés ayant comme similitude l'utilisation d'une articulation unique, et comme différence le fait que l'essieu de la remorque soit pourvu ou non d'un dispositif directionnel des roues, ceux non pourvus du dispositif directionnel ne pouvant répondre aux prescriptions relatives au rayon interne minimum, et ceux pourvus du dispositif directionnel ne pouvant répondre aux prescriptions relatives au balayage maximum, leur rayon interne étant rarement suffisant pour répondre également aux prescriptions, et leur conception résultant souvent tant en instabilité directionnelle à haute vitesse qu'en escalade de trottoirs au départ d'arrêts nécessitant un braquage substantiel.

L'invention a pour but de réaliser un véhicule routier articulé, en particulier un bus articulé, qui remédie aux inconvénients des divers types de bus articulés connus à ce jour tout en en augmentant la capacité et en répondant aux conditions actuelles d'inscription en courbe prévues pour des véhicules rigides.

A cet effet, dans un véhicule routier articulé constitué d'un véhicule guidant et d'un véhicule guidé selon l'invention, les extrémités du véhicule guidant et du véhicule guidé sont dirigées l'une vers l'autre et sont articulées toutes deux sur un élément intermédiaire dépourvu de roues, de telle sorte qu'il se forme une double articulation, et, outre des moyens classiques prévus pour absorber et contrôler les articulations dans les deux autres plans, des moyens sont prévus entre lesdites extrémités des véhicules guidant et guidé pour contrôler les déplacements relatifs dans le plan horizontal des axes géométriques longitudinaux du véhicule guidant, du véhicule guidé et de l'élément intermédiaire.

Dans une première forme de réalisation, l'élément intermédiaire précité et les extrémités précitées des véhicules guidant et guidé se recouvrent au droit des articulations précitées tandis que les moyens précités sont constitués par une bielle qui tourillonne sur deux rotules mères appartenant respectivement l'une et l'autre aux véhicules guidant et guidé, lesdites rotules mères étant disposées de telle sorte, par rapport à l'axe géométrique longitudinal du véhicule routier articulé précité que le braquage du véhicule guidant provoque l'inscription du véhicule guidé dans la courbe de braquage du véhicule guidant.

Pour réaliser l'effet désiré et empêcher les véhicules guidant et guidé et l'élément intermédiaire de se mettre en "Z", les rotules mères sur lesquelles tourillonne la bielle précitée sont disposées de part et d'autre de l'axe géométrique longitudinal de l'élément intermédiaire précité.

Dans une autre forme de réalisation, l'élément intermédiaire précité et les extrémités précitées des véhicules guidant et guidé se recouvrent au droit des articulations, tandis que l'élément intermédiaire précité porte en son centre un axe de pivotement pour un levier à bras multiples en T dont la base est reliée à rotule à une bielle tourillonnant en son autre extrémité sur une rotule mère fixée sur le véhicule guidant, tandis que les deux extrémités libres du levier à bras multiples en T, disposées symétriquement par rapport à l'axe de pivotement précité, sont équipées de roues à gorge pour suivre, chacune, une des courbures internes d'une came en forme de d dont la partie rectiligne est à assimiler à une seconde bielle dont l'extrémité libre tourillonne sur une rotule mère fixée sur le véhicule guidé, les deux rotules mères précitées étant disposées de part et d'autre de l'axe géométrique longitudinal de l'élément intermédiaire, les deux roues à gorge précitées étant logées dans deux découpes prévues à l'extrémité de chacune des courbures internes précitées lorsque les véhicules guidant et guidé sont en alignement, ces courbures étant, de plus, disposées de telle sorte qu'en début de braquage du véhicule guidant l'angle formé par l'axe géométrique longitudinal de celui-ci et le prolongement de l'axe géométrique longitudinal de l'élément intermédiaire soit plus important que l'angle formé entre l'axe géométrique longitudinal du véhicule guidé et le prolongement de celui de ce même élément intermédiaire.

D'autres détails et avantages de l'invention ressortiront de la description qui sera donnée ci-après d'un véhicule routier articulé, en particulier d'un bus articulé, selon l'invention.

Cette description n'est donnée qu'à titre d'exemple et ne limite pas l'invention; les notations de référence se rapportent aux figures ci-jointes.

Les figures 1 à 5 illustrent schématiquement, vues par-dessous, pour une première forme de réalisation, cinq positions respectives des véhicules guidant et guidé par rapport à l'élément intermédiaire, depuis une position de braquage extrême vers la droite (figure 1) jusqu'à une position de braquage extrême vers la gauche (figure 5), la figure 3 illustrant le cas des véhicules en position d'alignement.

Les figures 6 à 10 illustrent, également vues par-dessous, pour une seconde forme de réalisation, les mêmes positions respectives des véhicules guidant et guidé similaires aux figures 1 à 5.

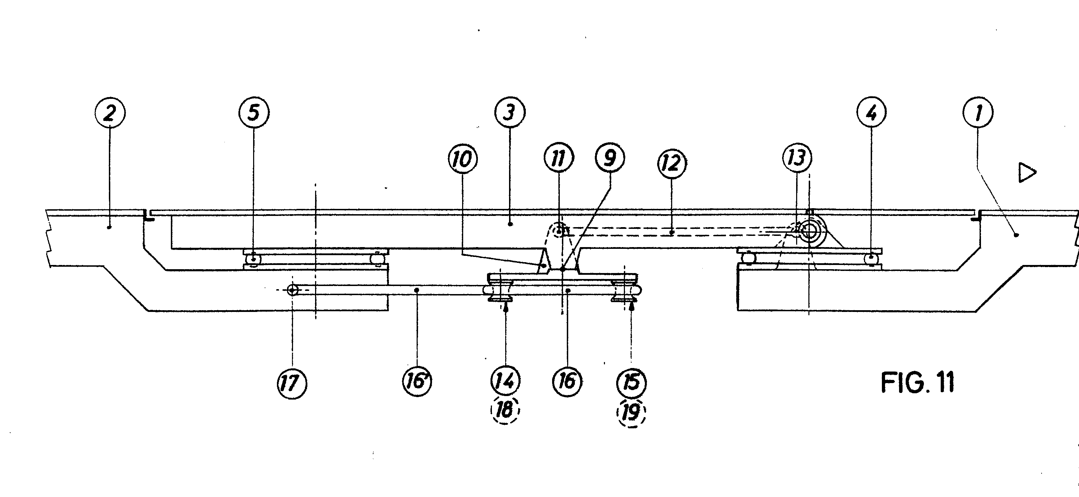

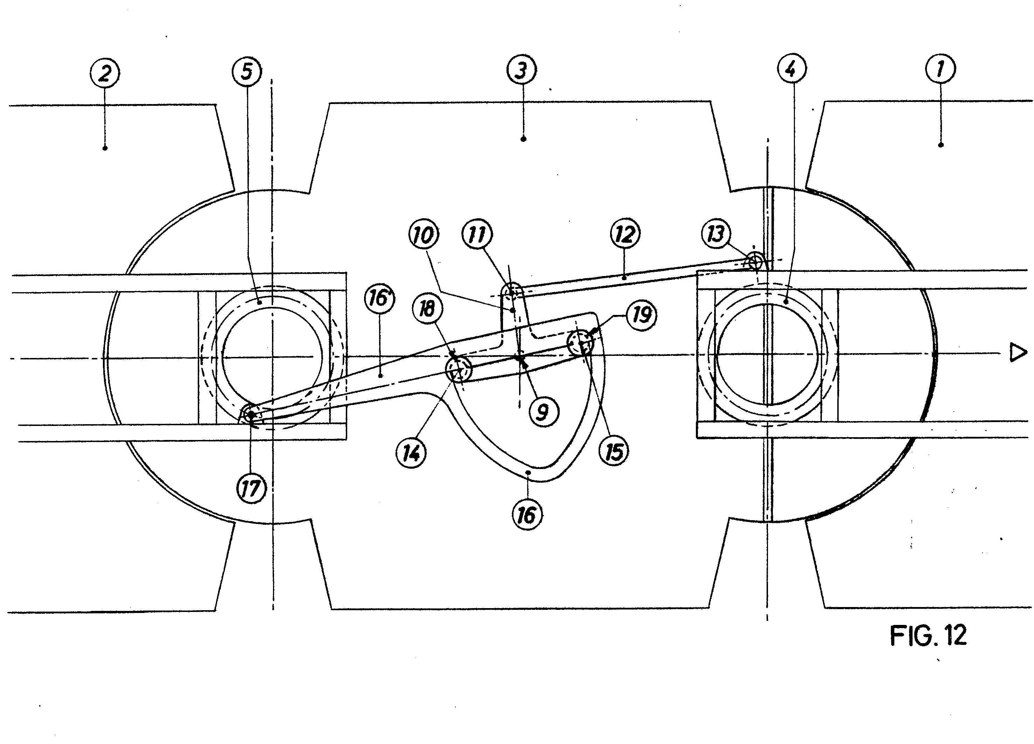

Les figures 11 et 12 sont respectivement une élévation latérale et une vue en plan par-dessous à une plus grande échelle de la seconde forme de réalisation.

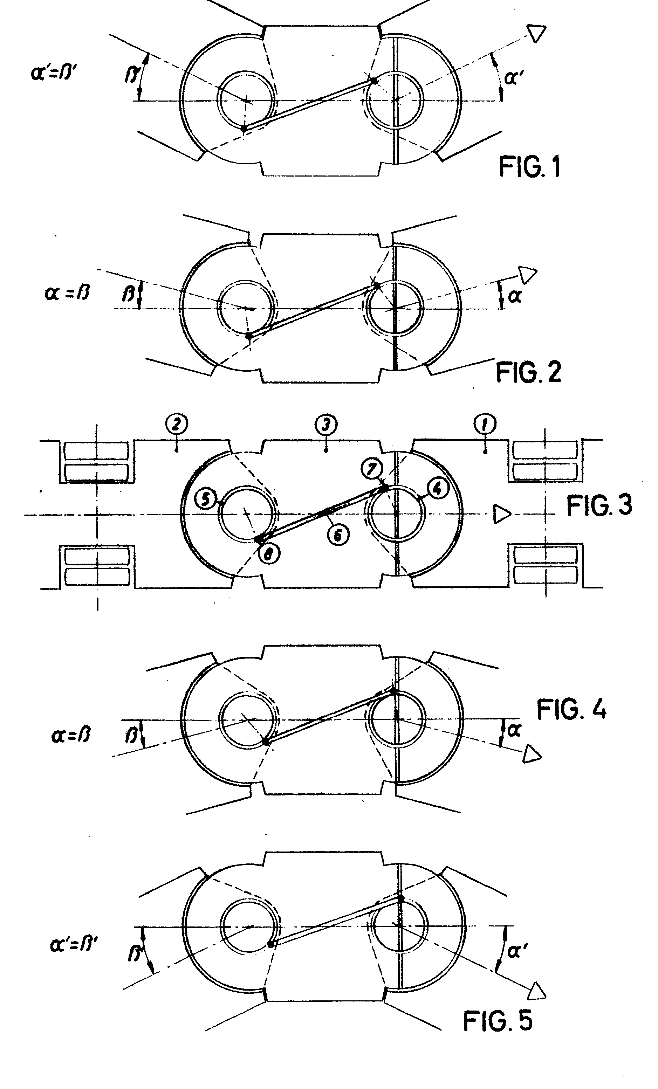

La forme d'articulation selon les figures 1 à 5 se rapporte à un système d'articulations qui résout les problèmes d'inscription en courbe caractéristiques aux bus articulés classiques tout en augmentant les surfaces de chargement utilisables de par la longueur totale qu'elles autorisent.

La double articulation représentée par les diverses figures comporte toujours, entre le véhicule guidant 1 et le véhicule guidé 2, un élément intermédiaire 3 non pourvu de roues. Les extrémités des véhicules guidant 1 et guidé 2 sont articulées sur l'élément intermédiaire 3, le centre des cercles à billes 4 et 5 coïcidant avec les axes géométriques d'articulation de la double articulation, caractéristique de la présente invention.

Dans la forme de réalisation selon les figures 1 à 5, une bielle 6 a ses extrémités tourillonnées en 7 et 8 respectivement sur le véhicule guidant et sur le véhicule guidé.

Comme on peut déduire de la succession des figures 1 à 5, on remarquera qu'en partant de la position selon la figure 3, laquelle correspond à la situation dans laquelle les véhicules guidant et guidé sont en alignement, un angle quelconque α de braquage de l'articulation antérieure vers la droite (figure 2) fait tourner d'un même angle β l'articulation postérieure et vice versa. Une accentuation du braquage de l'articulation antérieure selon l'angle α' (figure 1) amène l'articulation postérieure selon un même angle β' et vice versa.

La même situation se retrouve lorsque le braquage a lieu vers la gauche, ce que reflètent les figures 4 et 5. La bielle 6, tourillonnée en 7 et 8, de manière parfaitement symétrique par rapport à l'axe géométrique longitudinal de l'élément intermédiaire détermine la symétrie du positionnement des véhicules guidant et guidé par rapport à l'élément intermédiaire.

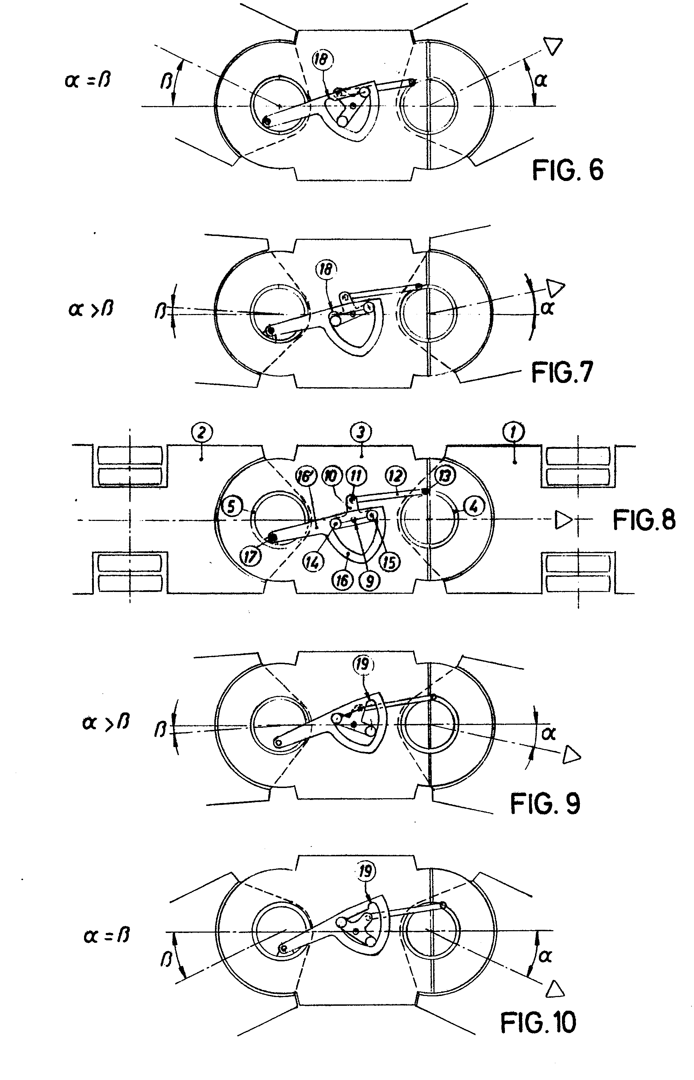

La forme de réalisation selon les figures 6 à 10 se rapporte à un système d'articulation qui maintient les avantages d'inscription en courbe et de surfaces utiles présentées par la forme précédente, tout en améliorant la stabilité directionnelle à grande vitesse et en évitant les déports du véhicule guidé vers les trottoirs lors des démarrages en courbe. Cette forme de réalisation fournit la solution idéale aux problèmes évoqués dans le préambule.

Dans la double articulation selon les figures 6 à 10, l'élément intermédiaire 3 est équipé d'un axe de pivotement 9 pour un levier à bras multiples en T 10 sur la base duquel tourillonne en 11 une bielle 12 dont l'extrémité opposée tourillonne sur une rotule mère 13 montée sur l'arrière du véhicule guidant 1.

Les extrémités libres du levier à bras multiples en T 10 sont équipées de roues à gorge 14 et 15 pour suivre, chacune, une des courbures internes d'une came 16 en forme de "d" dont la partie rectiligne 16' fait office de bielle dont l'extrémité tourillonne sur la rotule mère 17 montée à l'avant du véhicule guidé.

On remarquera que les rotules mères 13 et 17 sont disposées de part et d'autre de l'axe géométrique longitudinal de l'élément intermédiaire. On notera également que ces rotules mères 13 et 17 ne sont pas disposées symétriquement par rapport à cet axe géométrique. Ceci se lit aisément des figures 6 à 10 en observant la position des rotules mères 13 et 17 par rapport aux cercles à billes 4 et 5.

Les roues à gorge 14 et 15 se logent, toutes deux, dans des découpes 18 et 19 lorsque le véhicule articulé se trouve dans la position selon la figure 8.

Lorsque l'articulation antérieure est entraînée d'un angle α vers la droite (figure 7) la bielle 12 fait basculer le levier à bras multiples en T 10 de telle sorte que la roue à gorge 14 s'extrait de la découpe 18 et que la roue à gorge 15, logée dans la découpe 19, repousse la bielle 16' dont l'extrémité tourillonnant en 17 entraîne l'articulation postérieure pour l'amener progressivement et successivement dans les positions selon les figures 7 et 6 et vice versa.

La lecture des figures 8, 7 et 6 enseigne qu'en partant d'une position de non braquage (figure 8), dans laquelle les véhicules guidant et guidé sont alignés, pour passer en début de braquage à l'angle α (figure 7), on ne détermine dans l'articulation postérieure qu'un angle β, très inférieur à l'angle α (figure 7). L'angle β (figure 6) n'attient une valeur sensiblement égale à l'angle α (figure 6) qu'en fin de braquage. La même situation se développe entre les articulations antérieure et postérieure lors du braquage sur la gauche, comme l'illustrent les figures 9 et 10.

De la description qui précède résulte clairement qu'il est possible, avec des moyens mécaniques présentant une grande simplicité du point de vue de la conception mécanique, ainsi qu'une robustesse importante à l'usage, de contrôler le comportement correct en courbe d'un véhicule guidé à partir d'un véhicule guidant. Ceci est vrai que la traction soit prévue soit dans le véhicule guidant, soit dans le véhicule guidé.

Il est enfin évident que l'invention n'est pas limitée à la forme d'exécution décrite ci-dessus et que bien des modifications pourraient y être apportées sans sortir du cadre de la présente demande de brevet.

REVENDICATIONS

1. Véhicule routier articulé, en particulier autobus articulé, constitué d'un véhicule guidant et d'un véhicule guidé, caractérisé en ce que, les extrémités du véhicule guidant et du véhicule guidé sont dirigées l'une vers l'autre et sont articulées toutes deux sur un élément intermédiaire dépourvu de roues de telle sorte qu'il se forme une double articulation et en ce des moyens sont prévus entre lesdites extrémités des véhicules guidant et guidé pour contrôler les déplacements relatifs dans le plan horizontal des axes géométriques longitudinaux du véhicule guidant, du véhicule guidé et de l'élément intermédiaire.

2. Véhicule routier articulé selon la revendication 1, caractérisé en ce que l'élément intermédiaire précité et les extrémités précitées des véhicules guidant et guidé se recouvrent au droit des articulations précitées, tandis qu'une bielle tourillonne sur deux rotules mères appartenant respectivement l'une et l'autre aux véhicules guidant et guidé, lesdites rotules mères étant disposées de telle sorte par rapport à l'axe géométrique longitudinal du véhicule routier articulé précité que le braquage du véhicule guidant provoque l'inscription du véhicule guidé dans la courbe de braquage du véhicule guidant.

3. Véhicule routier articulé selon la revendication 2, caractérisé en ce que les rotules mères sur lesquelles tourillonne la bielle précitée sont disposées de part et d'autre de l'axe géométrique longitudinal de l'élément intermédiaire précité.

4. Véhicule routier articulé selon la revendication 1, caractérisé en ce que l'élément intermédiaire précité et les extrémités précitées des véhicules guidant et guidé se recouvrent au droit des articulations, tandis que l'élément intermédiaire précité porte en son centre un axe de pivotement pour un levier à bras multiples en T dont la base est reliée à rotule à une bielle tourillonnant en son autre extrémité sur une rotule mère fixée sur le véhicule guidant tandis que les deux extrémités libres du levier à bras multiples en T, disposées symétriquement par rapport à l'axe de pivotement précité, sont équipées de roues à gorge pour suivre, chacune, une des courbures internes d'une came en forme de "d" dont la partie rectiligne est à assimiler à une seconde bielle dont l'extrémité libre tourillonne sur une rotule mère fixée sur le véhicule guidé, les deux rotules mères précitées étant disposées de part et d'autre de l'axe géométrique longitudinal de l'élément intermédiaire, les deux roues à gorge précitées étant logées dans deux découpes prévues à l'extrémité de chacune des courbures internes précitées lorsque les véhicules guidant et guidé sont en alignement, les courbures étant, de plus, disposées de telle sorte qu'en début de braquage du véhicule guidant l'angle formé par l'axe géométrique longitudinal de celui-ci et le prolongement de l'axe géométrique longitudinal de l'élément intermédiaire soit plus important que l'angle formé entre l'axe géométrique longitudinal du véhicule guidé et le prolongement de celui de ce même élément intermédiaire.

5. Véhicule routier articulé selon la revendication 4, caractérisé en ce que les courbures internes de la came en forme de "d" précitée se croisent selon des trajectoires qui permettent à chacune des roues à gorge précitées de demeurer en contact avec chacune des courbures internes précitées pendant le déplacement de ladite pièce en forme de "d" suite au pivotement du levier à bras multiples en T au cours du braquage du véhicule guidant.

6. Véhicule routier articulé selon l'une quelconque des revendications 4 et 5, caractérisé en ce que la partie rectiligne précitée de la came en forme de "d" forme, avec l'axe longitudinal de l'élément intermédiaire, un angle qui augmente avec le braquage du véhicule guidant sous l'influence du pivotement du levier à bras multiples en forme de T précité contrôlé par les déplacements de la bielle précitée.

0012466

FIG. 1

FIG. 2

FIG. 3

FIG. 4

FIG. 5

$\alpha = \beta$

FIG. 6

$\alpha > \beta$

FIG.7

FIG.8

$\alpha > \beta$

FIG. 9

$\alpha = \beta$

FIG.10

FIG. 11

0012466

3/4

FIG. 12

00 12466

4/4

Office européen
des brevets

**RAPPORT DE RECHERCHE EUROPEENNE**

0012466
Numéro de la demande

EP 79 200 707.2

| Catégorie | Citation du document avec indication, en cas de besoin, des parties pertinentes | Revendication concernée |
|---|---|---|
| | AT - B - 230 745 (K. KÄSSBOHRER FAHR-ZEUGWERKE)<br>* document entier * <br><br>-- <br><br>AT - B - 192 764 (GAUBSCHAT FAHRZEUG-WERKE)<br>* document entier *<br><br>--<br><br>DE - C - 1 013 527 (K. KÄSSBOHRER FAHRZEUGWERKE)<br>* document entier *<br><br>-- | 1<br><br><br><br>1<br><br><br><br>1 |
| A | AT - B - 300 266 (ČKD PRAHA OBOROVÝ PODNIK)<br>* fig. 1, 2 *<br><br>---- | |

**DOCUMENTS CONSIDERES COMME PERTINENTS**

**CLASSEMENT DE LA DEMANDE (Int. Cl.³)**

B 60 D 5/00

B 62 D 53/00

**DOMAINES TECHNIQUES RECHERCHES (Int. Cl.³)**

B 60 D 5/00

B 62 D 7/00

B 62 D 13/00

B 62 D 15/00

B 62 D 47/00

B 62 D 53/00

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

X | Le présent rapport de recherche a été établi pour toutes les revendications

| Lieu de la recherche | Date d'achèvement de la recherche | Examinateur |
|---|---|---|
| Berlin | 22-02-1980 | LEITZ |

OEB Form 1503.1 06.78